# EUROPÄISCHE PATENTANMELDUNG

(11) **EP 4 424 442 A1**
(43) Veröffentlichungstag der Anmeldung: **04.09.2024**
(21) Anmeldenummer: 23159097.7
(22) Anmeldetag: 28.02.2023
(51) Int. Cl.: B22F 10/22, B22F 12/53, B22F 12/55, B22F 12/60, B29C 64/118, B29C 64/205, B29C 64/209, B33Y 10/00, B33Y 80/00, B22F 10/50, B22F 5/10, B22F 7/00

(54) **VERFAHREN ZUR HERSTELLUNG EINER LEITERANORDNUNG**

(71) Anmelder: Siemens Aktiengesellschaft, 80333 München (DE)
(72) Erfinder: Jähnicke, Jens, 09112 Chemnitz (DE)
(74) Vertreter: Siemens Patent Attorneys

(57) **Zusammenfassung**

Die Erfindung betrifft ein Verfahren zur Herstellung einer Leiteranordnung (30) mittels einer Druckanordnung (2), welche zur Verwendung in einem Schmelzschichtungssystem konfiguriert ist. Um eine verbesserte thermische Belastbarkeit und Spannungsfestigkeit der Leiteranordnung (30) zu erreichen, wird vorgeschlagen, dass die Druckanordnung (2) einen ersten Druckkopf (4) und einen zweiten Druckkopf (6) aufweist, wobei das Verfahren folgende Schritte umfasst: erstes Extrudieren (A) eines elektrisch isolierenden Werkstoffs (20) mittels des ersten Druckkopfs (4) zum Bilden einer Isolationsschicht (32) der Leiteranordnung (30); zweites Extrudieren (C) eines metallischen Werkstoffs (22) mittels des zweiten Druckkopfs (6) zum Bilden einer Leiterschicht (36) der Leiteranordnung (30) auf der Isolationsschicht (32), wobei der elektrisch isolierende Werkstoff (20) und/oder der metallische Werkstoff (22) beim Extrudieren (A, C), insbesondere vollständig, geschmolzen werden.

## Beschreibung

Die Erfindung betrifft ein Verfahren zur Herstellung einer Leiteranordnung mittels einer Druckanordnung, welche zur Verwendung in einem Schmelzschichtungssystem konfiguriert ist.

Ferner betrifft die Erfindung eine Leiteranordnung, welche mit einem derartigen Verfahren hergestellt ist.

Weiterhin betrifft die Erfindung eine Steuereinheit mit Mitteln zur Durchführung eines derartigen Verfahrens.

Überdies betrifft die Erfindung ein Computerprogramm zur Durchführung eines derartigen Verfahrens bei Ablauf in einer Steuereinheit.

Darüber hinaus betrifft die Erfindung eine Druckanordnung zur Herstellung einer Leiteranordnung, welche zur Verwendung in einem Schmelzschichtungssystem konfiguriert ist.

Derartige Leiteranordnungen können beispielsweise Spulen sein, die unter anderem in einer elektrischen rotierenden Maschine, insbesondere einem Motor oder einem Generator, zum Einsatz kommen können. Die thermische Belastbarkeit und auch die Spannungsfestigkeit derartiger Leiteranordnungen hängen unter anderem vom verwendeten Isolator ab. Beispielsweise werden Spulen üblicherweise aus kupferlackisolierten Drähten gewickelt, wobei der Kupferlackdraht aber, was z.B. die thermische Belastbarkeit und die Durchschlagspannung angeht, limitiert ist. Somit sind alternative Herstellungsverfahren von derartigen Leiteranordnungen zur Erhöhung der thermischen Belastbarkeit und Spannungsfestigkeit von Interesse.

Die additive Herstellung von dreidimensionalen Druckobjekten bietet eine verbesserte Flexibilität hinsichtlich der Geometrie und der Materialien. Die additive Herstellung kann beispielsweise mittels Schmelzschichtungsverfahren erfolgen. Gängige Schmelzschichtungsverfahren sind beispielsweise "Fused Deposition Modeling" (FDM) oder "Fused Filament Fabrication" (FFF).

Die Patentschrift US 10,828,698 B2 beschreibt ein additives Fertigungsverfahren, bei dem ein Verbundwerkstoff-Filament und ein Trennmaterial-Filament von entsprechenden Spulen in einen Druckkopf eingelassen werden. Sowohl das Filament für den Verbundwerkstoff als auch das Filament für das Trennmaterial enthalten ein Metall- oder Keramikpulver sowie ein Bindemittel. Auf den Spulen und über die Absprunghöhe werden die Filamente auf eine Temperatur erhitzt, die die Filamente biegt, sie aber nicht bis zur Bruchstelle erweicht. Die Absprunghöhe ist ähnlich linear wie die Bauplatte. Die Materialien werden entbindert und gesintert.

Der Erfindung liegt die Aufgabe zugrunde, ein Verfahren zur Herstellung einer Leiteranordnung mittels eines additiven Verfahrens anzugeben, mit welchem eine verbesserte thermische Belastbarkeit und Spannungsfestigkeit der Leiteranordnung erreicht wird.

Die Aufgabe wird erfindungsgemäß durch ein Verfahren zur Herstellung einer Leiteranordnung mittels einer Druckanordnung, welche zur Verwendung in einem Schmelzschichtungssystem konfiguriert ist, wobei die Druckanordnung einen ersten Drucckopf und einen zweiten Druckkopf aufweist, wobei das Verfahren folgende Schritte umfasst: erstes Extrudieren eines elektrisch isolierenden Werkstoffs mittels des ersten Drucckopfs zum Bilden einer Isolationsschicht der Leiteranordnung, zweites Extrudieren eines metallischen Werkstoffs mittels des zweiten Druckkopfs zum Bilden einer Leiterschicht der Leiteranordnung auf der Isolationsschicht, wobei der elektrisch isolierende Werkstoff und/oder der metallische Werkstoff beim Extrudieren, insbesondere vollständig, geschmolzen werden.

Ferner wird die Aufgabe erfindungsgemäß gelöst durch eine Leiteranordnung, welche mit einem derartigen Verfahren hergestellt ist.

Weiterhin wird die Aufgabe erfindungsgemäß gelöst durch eine Steuereinheit mit Mitteln zur Durchführung eines derartigen Verfahrens.

Überdies wird die Aufgabe erfindungsgemäß gelöst durch ein Computerprogramm zur Durchführung eines derartigen Verfahrens bei Ablauf in einer Steuereinheit.

Darüber hinaus wird die Aufgabe erfindungsgemäß gelöst durch eine Druckanordnung zur Herstellung einer Leiteranordnung, welche zur Verwendung in einem Schmelzschichtungssystem konfiguriert ist, aufweisend einen ersten Druckkopf und einen zweiten Druckkopf, wobei der erste Druckkopf zum Extrudieren eines elektrisch isolierenden Werkstoffs zum Bilden einer Isolationsschicht der Leiteranordnung konfiguriert ist, wobei der zweite Druckkopf zum Extrudieren eines metallischen Werkstoffs zum Bilden einer Leiterschicht der Leiteranordnung konfiguriert ist, wobei der erste Druckkopf konfiguriert ist, den elektrisch isolierenden Werkstoff und/oder der zweite Druckkopf konfiguriert ist, den metallischen Werkstoff beim Extrudieren, insbesondere vollständig, zu schmelzen.

Die in Bezug auf das Verfahren nachstehend angeführten Vorteile und bevorzugten Ausgestaltungen lassen sich sinngemäß auf die Leiteranordnung, die Steuereinheit, das Computerprogramm und die Druckanordnung übertragen.

Der Erfindung liegt die Überlegung zugrunde, sowohl eine Leiterschicht als auch eine Isolationsschicht einer Leiteranordnung mittels eines Schmelzschichtungsverfahrens herzustellen, wobei der elektrisch isolierende Werkstoff des Isolators und/oder der metallische Werkstoff des Leiters beim Extrudieren, insbesondere vollständig, geschmolzen werden. Der elektrisch isolierende Werkstoff des Isolators wird mittels eines ersten Druckkopfs zum Bilden der Isolationsschicht extrudiert, während der metallische Werkstoff des Leiters mittels eines zweiten Druckkopfs zum Bilden der Leiterschicht auf der Isolationsschicht extrudiert. Der metallische Werkstoff kann unter anderem Silber, Zinn, Kupfer, Aluminium oder eine deren Legierungen enthalten. Insbesondere kann als metallischer Werkstoff eine Aluminiumlegierung oder Lot verwendet werden. Als elektrisch isolierender Werkstoff kann unter anderem ein Hochtemperatur-Thermoplast eingesetzt werden, welchem optional Additive zugesetzt sein können. Durch die Verwendung dedizierter Druckköpfe für Leiter und Isolation wird das flexible Drucken einer Struktur der Leiteranordnung mit erhöhter thermischer Belastbarkeit und Spannungsfestigkeit ermöglicht. Insbesondere sind mit einem Schmelzschichtungsverfahren, bei welchem der metallische Werkstoff des Leiters zum Bilden der Leiterschicht auf der Isolationsschicht extrudiert wird, mehrlagige Leiteranordnungen flexibel realisierbar, was sich positiv auf die thermische Belastbarkeit und Spannungsfestigkeit auswirkt. Die additive Fertigung mittels Schmelzschichtungsverfahren ermöglicht ferner eine Querschnittsänderung des Leiters, was insbesondere vorteilhaft am Kopf der Spule ist, aber auch konkave Spulen-Geometrien.

Durch eine Steuereinheit wird eine dynamische Justierung der Druckköpfe ermöglicht, wodurch auch komplexe Leiteranordnungen schnell kostengünstig mittels Extrusion realisierbar sind. Die Mittel zu Durchführung des Verfahrens der Steuereinheit umfassen beispielswiese einen digitalen Logikbaustein, insbesondere einen Mikroprozessor, einen Mikrocontroller, einen FPGA (field programmable gate array), einen ASIC (application-specific integrated circuit), der für den Betrieb der Anordnung zur Materialextrusion konfiguriert ist.

Eine weitere Ausführungsform sieht vor, dass wobei das erste Extrudieren und das zweite Extrudieren synchron erfolgen. Unter einem synchronen Extrudieren ist zu verstehen, dass das Extrudieren mittels des ersten Druckkopfs und des zweiten Druckkopfs in einem Druckprozess erfolgt, wodurch eine optimale Verbindung zwischen der Leiterschicht und der Isolationsschicht herstellbar ist, was sich positiv auf die thermische Belastbarkeit und Spannungsfestigkeit der Leiteranordnung auswirkt. Ferner wird durch das synchrone Extrudieren Fertigungszeit eingespart.

Eine weitere Ausführungsform sieht vor, dass die Druckanordnung eine Profilierungsvorrichtung, welche zwischen dem ersten Druckkopf und dem zweiten Druckkopf angeordnet ist, aufweist, wobei das Verfahren folgende Schritte umfasst: Profilieren der Isolationsschicht zum Bilden einer konkaven Ausnehmung in der Isolationsschicht nach dem ersten Extrudieren, zweites Extrudieren des metallischen Werkstoffs in der konkaven Ausnehmung der Isolationsschicht. Die konkave Ausnehmung der Isolationsschicht kann unter anderem einen halbkreisförmigen, halbelliptischen oder segmentförmigen Querschnitt aufweisen. Beispielsweise wird der metallische Werkstoff, welcher beim Extrudieren eine geringe Viskosität aufweisen kann, in die konkave Ausnehmung der Isolationsschicht geleitet oder zumindest bis zum Erstarren dort gehalten, sodass das Extrudieren erleichtert wird.

Eine weitere Ausführungsform sieht vor, dass das Verfahren als weiteren Schritt ein erstes Extrudieren des elektrisch isolierenden Werkstoffs mittels des ersten Druckkopfs zum Bilden der Isolationsschicht der Leiteranordnung auf der Leiterschicht vorsieht, wobei eine Mantelfläche der Leiterschicht vollständig mit dem elektrisch isolierenden Werkstoff kontaktiert wird. Somit ist die Leiterschicht im Bereich der Mantelfläche vollständig von der Isolationsschicht umgeben, sodass eine hohe thermische Belastbarkeit und Spannungsfestigkeit erreicht wird.

Eine weitere Ausführungsform sieht vor, dass das Extrudieren des elektrisch isolierenden Werkstoffs und des metallischen Werkstoffs spiralförmig zum Ausbilden einer spiralförmigen Wicklung einer Spule erfolgt. Eine derartige Spule kann unter anderem für eine Wicklung, insbesondere eine Zahnspulenwicklung, einer elektrischen rotierenden Maschine vorgesehen sein.

Eine weitere Ausführungsform sieht vor, dass beim ersten Extrudieren und/oder beim zweiten Extrudieren ein Schutzgas in einem Extrusions-Bereich der jeweiligen Schicht zugeführt wird. Das Schutzgas enthält beispielsweise Argon oder Stickstoff zur Verhinderung einer Oxidation des extrudierten Werkstoffs. Ferner kann durch gezieltes Zuführen von Schutzgas ein Abkühlen des extrudierten Werkstoffs auf eine definierten Temperaturbereich erfolgen.

Eine weitere Ausführungsform sieht vor, dass der elektrisch isolierende Werkstoff ein Glas enthält. Beispielsweise ist der elektrisch isolierende Werkstoff Quarzglas oder Borosilikatglas. Durch Verwendung derartiger Gläser wird eine optimierte Durchschlagsfestigkeit und Teilentladungsfestigkeit der Leiteranordnung erreicht.

Eine weitere Ausführungsform sieht vor, dass der metallische Werkstoff Kupfer, Aluminium, Silber oder eine deren Legierungen enthält. Ein derartiger metallischer Werkstoff weist einen geringen elektrischen Widerstand auf, sodass eine sehr geringe Verlustwärme und damit eine sehr geringe thermische Belastung entsteht.

Eine weitere Ausführungsform sieht vor, dass der erste Drucckopf und/oder der zweite Druckkopf eine Düse aufweisen, welche Platin und/oder Molybdän enthält. Derartige Metalle weisen einen sehr hohen Schmelzpunkt auf und ermöglichen das Extrudieren von Werkstoffen mit einem hohen Schmelzpunkt. Ferner sind derartige Metalle vorteilhaft wegen der bei anderen Metallen, wie z.B. Stahl, vorhandenen Erosion der Metalle über Diffusionsprozesse z.B. gegenüber geschmolzenem Glas.

Eine weitere Ausführungsform sieht vor, dass beim Extrudieren ein Filament in der Düse mittels Induktion erhitzt wird. Das

Erhitzen durch Induktion in der Düse ist effizient und ermöglicht ein genaues Einstellen von hohen Extrusions-Temperaturen.

Eine weitere Ausführungsform sieht vor, dass die Isolationsschicht nach dem ersten Extrudieren derartig gekühlt wird, dass das Profilieren bei einer mindestens 10-fach, insbesondere mindestens 100-fach, ferner insbesondere mindestens 1000-fach, geringeren Viskosität stattfindet. Beispielsweise liegt eine Viskosität eines geschmolzenen Glases beim Extrudieren bei η=102 dPa·s. Das Profilieren findet z.B. bei einer Viskosität im Bereich von 103 dPa·s bis 107 dPa·s, insbesondere 104 dPa·s bis 106 dPa·s statt. Durch die geringere Viskosität wird das Glas zähflüssiger, was ein stabiles Profilierungsergebnis ermöglicht.

Im Folgenden wird die Erfindung anhand der in den Figuren dargestellten Ausführungsbeispiele näher beschrieben und erläutert.

Es zeigen:
- FIG 1: eine schematische Darstellung einer Druckanordnung,
- FIG 2: eine schematische Darstellung eines Verfahrens zur Herstellung einer Leiteranordnung,
- FIG 3: eine vergrößerte schematische Darstellung des Verfahrens beim zweiten Extrudieren der Leiterschicht,
- FIG 4: eine vergrößerte schematische Darstellung des Verfahrens beim ersten Extrudieren der Isolationsschicht und
- FIG 5: eine vergrößerte schematische Darstellung des Verfahrens beim Profilieren der Isolationsschicht.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

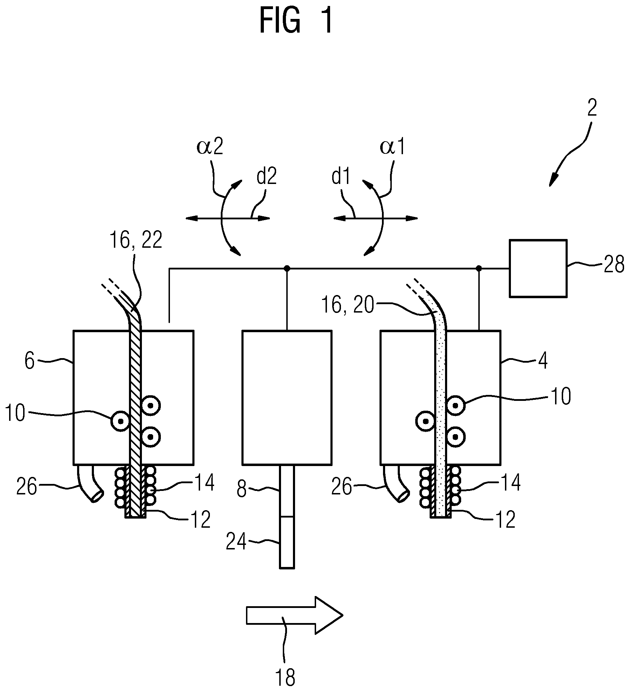

FIG 1 zeigt eine Druckanordnung 2, mit einem ersten Drucckopf 4, einem zweiten Druckkopf 6 und einer Profilierungsvorrichtung 8, welche zwischen dem ersten Druckkopf 4 und dem zweiten Druckkopf 6 angeordnet ist. Die Druckanordnung 2 ist zur Verwendung in einem Schmelzschichtungssystem konfiguriert. Die Druckköpfe 4, 6 weisen jeweils einen Extruder 10 und eine Düse 12 auf. Die Düsen 12 enthalten beispielsweise Platin und/oder Molybdän und weisen eine Induktionsspule 14 auf, welche zum Erhitzen eines Filaments 16 in der Düse 12 konfiguriert ist. Die Druckköpfe 4, 6 sind zu einem synchronen Extrudieren in einer Druckrichtung 18 konfiguriert.

Beispielhaft ist der erste Druckkopf 4 zum Extrudieren eines elektrisch isolierenden Werkstoffs 20, welcher beispielsweise ein Glas, insbesondere Quarzglas oder Borosilikatglas, enthält konfiguriert, während der zweite Druckkopf 6 zum Extrudieren eines metallischen Werkstoffs 22, beispielsweise Kupfer, Aluminium, Silber oder eine deren Legierungen, konfiguriert ist. Alternativ kann der erste Druckkopf 4 zum Extrudieren des metallischen Werkstoffs 22 konfiguriert sein, während der zweite Druckkopf 6 zum Extrudieren des elektrisch isolierenden Werkstoffs 20 konfiguriert ist. Die Druckköpfe sind konfiguriert, die jeweiligen Werkstoffe 20, 22 beim Extrudieren A, C, insbesondere vollständig, zu schmelzen.

Die Profilierungsvorrichtung 8, welche zwischen den Druckköpfen 4, 6 angeordnet ist, weist eine Profilschablone 24 auf. Die Profilschablone 24 ist konfiguriert, eine vom ersten Druckkopf 4 extrudierte Schicht zu profilieren. Beispielsweise ist die Profilschablone 24 der Profilierungsvorrichtung 8 konfiguriert, eine, insbesondere konkave, Ausnehmung in die vom ersten Druckkopf 4 extrudierte Schicht einzufügen.

Die Druckanordnung 2 umfasst darüber hinaus Gasdüsen 26, die jeweils einem der Druckköpfe 4, 6 zugeordnet sind und zum Zuführen von Schutzgas in einem Extrusions-Bereich konfiguriert sind, wodurch beispielsweise der extrudierte elektrisch isolierende Werkstoff 20 durch das zugeführte Schutzgas auf eine definierten Temperaturbereich zum Profilieren mit der Profilierungsvorrichtung 8 abkühlbar ist. Das Schutzgas enthält beispielsweise Argon oder Stickstoff zur Verhinderung einer Oxidation des extrudierten Werkstoffs 20, 22.

Die Druckköpfe 4, 6 sind jeweils im Verhältnis zur Profilierungsvorrichtung 8 um einen Winkel α1, α2 drehbar und in einem Abstand d1, d2 verfahrbar angeordnet, sodass auch komplexe Geometrien herstellbar sind. Die Ansteuerung erfolgt mittels einer Steuereinheit 28.

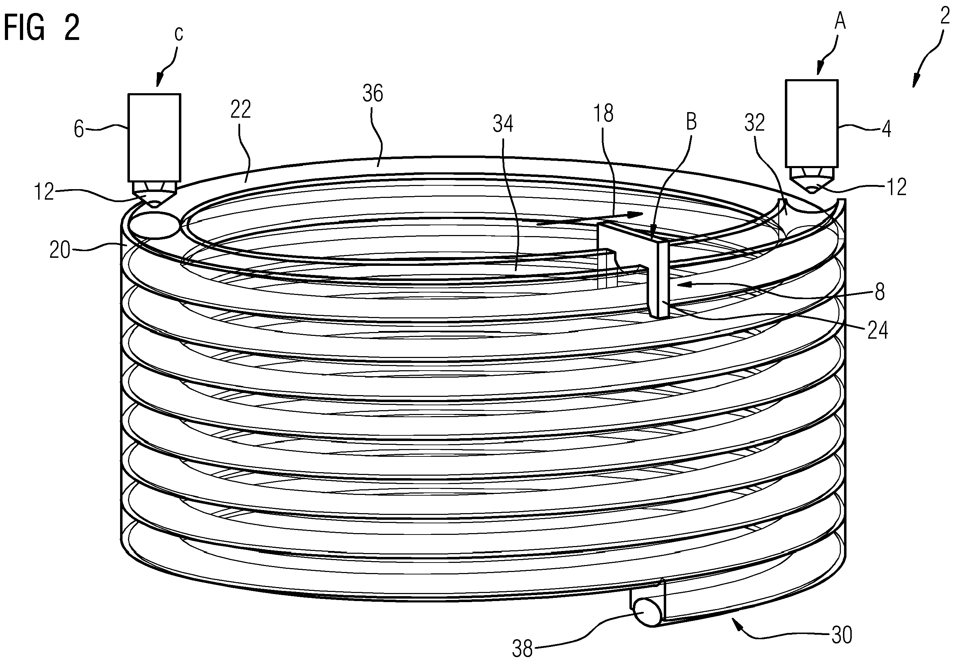

FIG 2 zeigt eine schematische Darstellung eines Verfahrens zur Herstellung einer Leiteranordnung 30. Die Herstellung der Leiteranordnung 30 erfolgt beispielhaft mit einer Druckanordnung 2 gemäß FIG 1. Das Verfahren umfasst ein erstes Extrudieren A eines elektrisch isolierenden Werkstoffs 20 mittels des ersten Druckkopfs 4 zum Bilden einer Isolationsschicht 32 der Leiteranordnung 30, ein Profilieren B der Isolationsschicht 32 zum Bilden einer konkaven Ausnehmung 34 in der Isolationsschicht 32 und zweites Extrudieren C eines metallischen Werkstoffs 22 mittels des zweiten Druckkopfs 6 zum Bilden einer Leiterschicht 36 der Leiteranordnung 30 in der konkaven Ausnehmung 34 der Isolationsschicht 32. Beim Extrudieren A, C werden der elektrisch isolierende Werkstoff 20 und der metallische Werkstoff 22 vollständig geschmolzen. Das erste Extrudieren A, das Profilieren B und das zweite Extrudieren C erfolgen synchron in der Druckrichtung 18. Die konkaven Ausnehmung 34 der Isolationsschicht 32 weist einen halbkreisförmigen, halbelliptischen oder segmentförmigen Querschnitt auf.

Das Extrudieren A, C des elektrisch isolierenden Werkstoffs 20 und des metallischen Werkstoffs 22 sowie das Profilieren B erfolgen beispielhaft spiralförmig zum Ausbilden einer spiralförmigen Wicklung einer Spule 38. Der elektrisch isolierende Werkstoff 20 kann ein Glas, z.B. Quarzglas oder Borosilikatglas, enthalten. Der metallische Werkstoff 22 kann Kupfer, Aluminium, Silber oder eine deren Legierungen enthalten. Insbesondere ist eine Viskosität des extrudierten Glases geringer als eine Viskosität des extrudierten Metalls, wobei die Viskosität des extrudierten Glases, insbesondere durch Zuführen von Schutzgas, reduziert wird, um ein stabiles Profilieren B zu ermöglichen. Durch die konkave Ausnehmung 34 der Isolationsschicht 32 wird das Extrudieren des metallischen Werkstoffs 22 mit der geringeren Viskosität erleichtert. Durch Zuführen von Schutzgas erstarrt der metallische Werkstoff 22 in der konkaven Ausnehmung der Isolationsschicht 32.

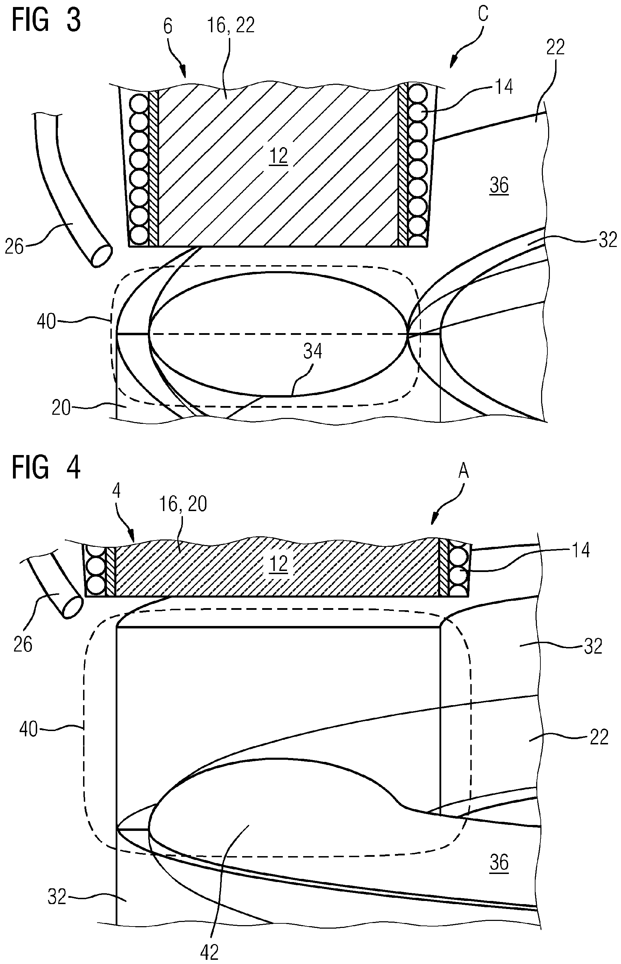

FIG 3 zeigt eine vergrößerte schematische Darstellung des Verfahrens beim zweiten Extrudieren C der Leiterschicht 36, wobei der metallische Werkstoff 22 zum Ausbilden der Leiterschicht 36 in die konkave Ausnehmung 34 der Isolationsschicht 32 extrudiert wird. Schutzgas wird zum Kühlen und Verhindern einer Oxidation des metallischen Werkstoffs 22, beispielhaft über eine Gasdüse 26, in einem Extrusions-Bereich 40 der Leiterschicht 36 zugeführt.

FIG 4 zeigt eine vergrößerte schematische Darstellung des Verfahrens beim ersten Extrudieren A der Isolationsschicht 32, bei der elektrisch isolierenden Werkstoff 20 mittels des ersten Druckkopfs 4 zum Bilden der Isolationsschicht 32 auf der Leiterschicht 36 extrudiert wird. Schutzgas wird zum Kühlen, beispielhaft über eine Gasdüse 26, in einem Extrusions-Bereich 40 der Isolationsschicht 32 zugeführt. Durch eine obere und eine untere Isolationsschicht 32 ist eine Mantelfläche 42 der Leiterschicht 36 vollständig mit dem elektrisch isolierenden Werkstoff 20 kontaktiert bzw. ist von diesem vollständig umgeben.

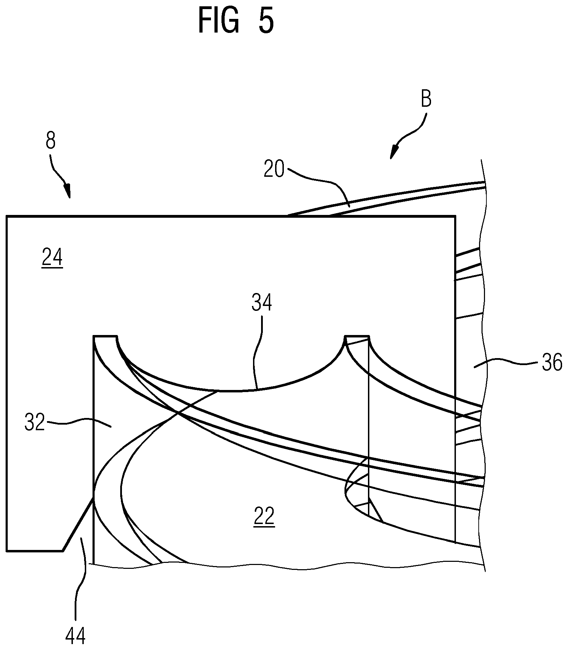

FIG 5 zeigt eine vergrößerte schematische Darstellung des Verfahrens beim Profilieren B der Isolationsschicht, wobei die Profilschablone 24 eine konkaven Ausnehmung 34 der Isolationsschicht 32 mit einem beispielhaft halbelliptischen Querschnitt formt. Überschüssiges Material des extrudierten elektrisch isolierenden Werkstoffs 20 wird über eine seitliche Ausnehmung 44 der Profilschablone 24 abgestreift. Die Profilschablone 24 kann unter anderem Wolfram oder Molybdän enthalten.

Zusammenfassend betrifft die Erfindung ein Verfahren zur Herstellung einer Leiteranordnung 30 mittels einer Druckanordnung 2, welche zur Verwendung in einem Schmelzschichtungssystem konfiguriert ist. Um eine verbesserte thermische Belastbarkeit und Spannungsfestigkeit der Leiteranordnung 30 zu erreichen, wird vorgeschlagen, dass die Druckanordnung 2 einen ersten Druckkopf 4 und einen zweiten Druckkopf 6 aufweist, wobei das Verfahren folgende Schritte umfasst: erstes Extrudieren A eines elektrisch isolierenden Werkstoffs 20 mittels des ersten Druckkopfs 4 zum Bilden einer Isolationsschicht 32 der Leiteranordnung 30; zweites Extrudieren C eines metallischen Werkstoffs 22 mittels des zweiten Druckkopfs 6 zum Bilden einer Leiterschicht 36 der Leiteranordnung 30 auf der Isolationsschicht 32, wobei der elektrisch isolierende Werkstoff 20 und/oder der metallische Werkstoff 22 beim Extrudieren A, C, insbesondere vollständig, geschmolzen werden.

## Patentansprüche

1. Verfahren zur Herstellung einer Leiteranordnung (30) mittels einer Druckanordnung (2), welche zur Verwendung in einem Schmelzschichtungssystem konfiguriert ist,
wobei die Druckanordnung (2) einen ersten Druckkopf (4) und einen zweiten Druckkopf (6) aufweist,
wobei das Verfahren folgende Schritte umfasst:
- erstes Extrudieren (A) eines elektrisch isolierenden Werkstoffs (20) mittels des ersten Druckkopfs (4) zum Bilden einer Isolationsschicht (32) der Leiteranordnung (30),
- zweites Extrudieren (C) eines metallischen Werkstoffs (22) mittels des zweiten Druckkopfs (6) zum Bilden einer Leiterschicht (36) der Leiteranordnung (30) auf der Isolationsschicht (32),
wobei der elektrisch isolierende Werkstoff (20) und/oder der metallische Werkstoff (22) beim Extrudieren (A, C), insbesondere vollständig, geschmolzen werden.

2. Verfahren nach Anspruch 1,
wobei das erste Extrudieren (A) und das zweite Extrudieren (C) synchron erfolgen.

3. Verfahren nach einem der Ansprüche 1 oder 2,
wobei die Druckanordnung (2) eine Profilierungsvorrichtung (8), welche zwischen dem ersten Druckkopf (4) und dem zweiten Druckkopf (6) angeordnet ist, aufweist,
wobei das Verfahren folgende Schritte umfasst:
- Profilieren (B) der Isolationsschicht (32) zum Bilden einer konkaven Ausnehmung (34) in der Isolationsschicht (32) nach dem ersten Extrudieren (A),
- zweites Extrudieren (C) des metallischen Werkstoffs (22) in der konkaven Ausnehmung (34) der Isolationsschicht (32).

4. Verfahren nach einem der Ansprüche 1 bis 3,
umfassend folgenden weiteren Schritt:
- erstes Extrudieren (A) des elektrisch isolierenden Werkstoffs (20) mittels des ersten Druckkopfs (4) zum Bilden der Isolationsschicht (32) der Leiteranordnung (30) auf der Leiterschicht (36),
wobei eine Mantelfläche (42) der Leiterschicht (36) vollständig mit dem elektrisch isolierenden Werkstoff (20) kontaktiert wird.

5. Verfahren nach einem der vorherigen Ansprüche,
wobei das Extrudieren (A, C) des elektrisch isolierenden Werkstoffs (20) und des metallischen Werkstoffs (22) spiralförmig zum Ausbilden einer spiralförmigen Wicklung einer Spule (38) erfolgt.

6. Verfahren nach einem der vorherigen Ansprüche,
wobei beim ersten Extrudieren (A) und/oder beim zweiten Extrudieren (C) ein Schutzgas in einem Extrusions-Bereich (40) der jeweiligen Schicht (32, 36) zugeführt wird.

7. Verfahren nach einem der vorherigen Ansprüche,
wobei der elektrisch isolierende Werkstoff (20) ein Glas enthält.

8. Verfahren nach einem der vorherigen Ansprüche,
wobei der metallische Werkstoff (22) Kupfer, Aluminium, Silber oder eine deren Legierungen enthält.

9. Verfahren nach einem der vorherigen Ansprüche,
wobei der ersten Druckkopf (4) und/oder der zweite Drucckopf (6) eine Düse (12) aufweisen, welche Platin und/oder Molybdän enthält,
wobei beim Extrudieren (A, C) ein Filament (16) in der Düse (12) mittels Induktion erhitzt wird.

10. Verfahren nach einem der vorherigen Ansprüche,
wobei die Isolationsschicht (32) nach dem ersten Extrudieren (A) derartig gekühlt wird, dass das Profilieren (B) bei einer mindestens 10-fach, insbesondere mindestens 100-fach, ferner insbesondere mindestens 1000-fach, geringeren Viskosität stattfindet.

11. Leiteranordnung (30), welche mit einem Verfahren nach einem der vorherigen Ansprüche hergestellt ist.

12. Steuereinheit (28) mit Mitteln zur Durchführung eines Verfahrens nach einem der Ansprüche 1 bis 10.

13. Computerprogramm zur Durchführung eines Verfahrens nach einem der Ansprüche 1 bis 10 bei Ablauf in einer Steuereinheit (28) nach Anspruch 12.

14. Druckanordnung (2) zur Herstellung einer Leiteranordnung (30), welche zur Verwendung in einem Schmelzschichtungssystem konfiguriert ist, aufweisend einen ersten Drucckopf (4) und einen zweiten Druckkopf (6),
wobei der erste Druckkopf (4) zum Extrudieren eines elektrisch isolierenden Werkstoffs (20) zum Bilden einer Isolationsschicht (32) der Leiteranordnung (30) konfiguriert ist,
wobei der zweite Druckkopf (6) zum Extrudieren eines metallischen Werkstoffs (22) zum Bilden einer Leiterschicht (36) der Leiteranordnung (30) konfiguriert ist,
wobei der erste Druckkopf (4) konfiguriert ist, den elektrisch isolierenden Werkstoff (20) und/oder der zweite Druckkopf (6) konfiguriert ist, den metallischen Werkstoff (22) beim Extrudieren (A, C), insbesondere vollständig, zu schmelzen.

15. Druckanordnung (2) nach Anspruch 14,
wobei die Druckköpfe (4, 6) zu einem synchronen Extrudieren (A, C) konfiguriert sind.

16. Druckanordnung (2) nach einem der Ansprüche 14 oder 15, aufweisend eine Profilierungsvorrichtung (8), welche zwischen dem ersten Druckkopf (4) und dem zweiten Druckkopf (6) angeordnet ist, aufweist,
wobei die Profilierungsvorrichtung (8) zum Bilden einer konkaven Ausnehmung (34) in der Isolationsschicht (32) nach dem ersten Extrudieren (A) des elektrisch isolierenden Werkstoffs (20) konfiguriert ist.

17. Druckanordnung (2) nach einem der Ansprüche 14 bis 16, aufweisend zumindest eine Gasdüse (26), welche zum Zuführen von Schutzgas in einem Extrusions-Bereich (40) konfiguriert ist.

18. Druckanordnung (2) nach einem der Ansprüche 14 bis 17, wobei der ersten Druckkopf (4) und/oder der zweite Drucckopf (6) eine Düse (12), welche Platin und/oder Molybdän enthält, und eine Induktionsspule (14), welche zum Erhitzen eines Filaments (16) in der Düse (12) konfiguriert ist, aufweisen.

19. Druckanordnung (2) nach einem der Ansprüche 14 bis 18, wobei der erste Druckkopf (4) zum Extrudieren von Glas und/oder der zweite Druckkopf (6) zum Extrudieren von Kupfer, Aluminium, Silber oder eine deren Legierungen konfiguriert ist.
